(19) Europäisches Patentamt
European Patent Office
Office européen des brevets

(11) **EP 2 501 561 B1**

## (12) EUROPÄISCHE PATENTSCHRIFT

(45) Veröffentlichungstag und Bekanntmachung des Hinweises auf die Patenterteilung:
**24.07.2013 Patentblatt 2013/30**

(21) Anmeldenummer: **10759619.9**

(22) Anmeldetag: **23.09.2010**

(51) Int Cl.:
**B60C 11/13** *(2006.01)* **B60C 11/12** *(2006.01)*

(86) Internationale Anmeldenummer:
**PCT/EP2010/064018**

(87) Internationale Veröffentlichungsnummer:
**WO 2011/057852 (19.05.2011 Gazette 2011/20)**

(54) **LAUFSTREIFENPROFIL EINES FAHRZEUGREIFENS**

TREAD PROFILE OF A VEHICLE TIRE

SCULPTURE DE BANDE DE ROULEMENT D'UN PNEUMATIQUE DE VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **16.11.2009 DE 102009044553**

(43) Veröffentlichungstag der Anmeldung:
**26.09.2012 Patentblatt 2012/39**

(73) Patentinhaber: **Continental Reifen Deutschland GmbH**
**30165 Hannover (DE)**

(72) Erfinder:
• SCHLITTENHARD, Jan
**30900 Wedemark (DE)**
• DIENSTHUBER, Franz
**30559 Hannover (DE)**

(74) Vertreter: **Finger, Karsten**
**Continental Aktiengesellschaft**
**Patente und Lizenzen**
**Postfach 169**
**30001 Hannover (DE)**

(56) Entgegenhaltungen:
**EP-A1- 2 138 329        EP-A1- 2 230 103**
**DE-A1-102007 061 148    NL-C1- 2 001 388**

**Beschreibung**

Die Erfindung betrifft ein Laufflächenprofil eines Fahrzeugreifens - insbesondere eines Fahrzeugluftreifens - mit zwei in axialer Richtung A des Fahrzeugluftreifens benachbarten radial erhabenen Profilblockelementen, die durch eine Profilrille voneinander beabstandet sind, deren Erstreckungsrichtung mit einer größere Richtungskomponente in axialer Richtung A als in Umtangsrichtung U ausgebildet ist, wobei die beiden Profilblockelemente in Umfangsrichtung zu beiden Seiten jeweils von einer Quer- oder Schrägrille begrenzt werden und sich die Profilrille, von der einen die beiden Profilblockelemente begrenzenden Quer- oder Schrägrille zu der anderen die beiden Profilblockelemente begrenzenden Quer- oder Schrägrille erstreckt, mit längs der Erstreckungsrichtung der Profilrille verändert ausgebildeten in Umfangsrichtung U des Fahrzeugreifens gemessenen Umfangssteifigkeiten beider Profilblockelemente, wobei ausgehend von der ersten Quer- oder Schrägrille zur zweiten Quer- oder Schrägrille die Umfangssteifigkeit des ersten Profilblockelementes zu- und die Umfangssteifigkeit des zweiten Profilblockelementes abnimmt, mit einem gegenüber dem Rillengrund der Quer- oder Schrägrille radial erhöhten Rillengrund der Profilrille.

Es sind Laufflächenprofil mit in Umfangsrichtung eines Fahrzeugreifens hintereinander angeordneten Profilblockelementen, die durch stegförmige die beiden Profilblockelemente dauerhaft verbindende Anhebungen des Rillengrundes versteift sind, bekannt. Hierdurch werden die Profilelemente in Umfangsrichtung des Reifens punktuell in Umfangsrichtung versteift. Die punktuelle dauerhafte Versteifung begünstigt einen ungleichmäßigen Abrieb. Die dauerhafte Versteifung bewirkt beim Durchlaufen des Reifenlatsches eine Erhöhung des Rollwiderstandes.

Aus der DE 10 2007 061 148 A1 ist ein Laufflächenprofil eines Fahrzeugreifens gemäß den Merkmalen des Oberbegriffes des Anspruchs 1 bekannt.

Aus der NL 2001388 C1 ist bekannt, in der Profilrille eine weitere schmale Nut im Rillengrund auszubilden, die sich lediglich innerhalb des mittleren Erstreckungsbereiches der Rille parallel ausgerichtet zur Rille erstreckt.

Aus der EP 2138329 A1 ist es bekannt, am Rillengrund eine Quernut einer sich in Umfangsrichtung erstreckenden Profilblockreihe eine schmale Nut auszubilden.

Der Erfindung liegt daher die Aufgabe zugrunde, ein Laufflächenprofil eines Fahrzeugreifens - insbesondere eines Fahrzeugluftreifens - mit zwei in axialer Richtung A des Fahrzeugluftreifens benachbarten radial erhabenen Profilblockelementen, die durch eine Profilrille voneinander beabstandet sind, deren Erstreckungsrichtung mit einer größere Richtungskomponente in axialer Richtung A als in Umfangsrichtung U ausgebildet ist, wobei die beiden Profilblockelemente in Umfangsrichtung zu beiden Seiten jeweils von einer Quer- oder Schrägrille begrenzt werden und sich die Profilrille von der einen die beiden Profilblockelemente begrenzenden Quer- oder Schrägrille zu der anderen die beiden Profilblockelemente begrenzenden Quer- oder Schrägrille erstreckt, mit längs der Erstreckungsrichtung der Profilrille verändert ausgebildeten in Umfangsrichtung U des Fahrzeugreifens gemessenen Umfangssteifigkeiten beider Profilblockelemente, wobei ausgehend von der ersten Quer- oder Schrägrille zur zweiten Quer- oder Schrägrille die Umfangssteifigkeit des ersten Profilblockelementes zu- und die Umfangssteifigkeit des zweiten Profilblockelementes abnimmt, mit einem gegenüber dem Rillengrund der Quer- oder Schrägrille radial erhöhten Rillengrund der Profilrille, zu schaffen, bei dem bei reduziertem Rollwiderstand in einfacher Weise die von der Profilrille getrennten benachbarten Profilblockelemente gleichmäßig versteift und das Blockprofil bei Abplattung gleichmäßig gestützt wird und bei dem somit bei hoher Kraftübertragung in Umfangsrichtung und in axialer Richtung ein vergleichmäßigter Abrieb ermöglicht wird.

Erfindungsgemäß gelöst wird die Aufgabe durch die Ausbildung eines Laufflächenprofil eines Fahrzeugreifens - insbesondere eines Fahrzeugluftreifens - mit zwei in axialer Richtung A des Fahrzeugluftreifens benachbarten radial erhabenen Profilblockelementen, die durch eine Profilrille voneinander beabstandet sind, deren Erstreckungsrichtung mit einer größere Richtungskomponente in axialer Richtung A als in Umfangsrichtung U ausgebildet ist, wobei die beiden Profilblockelemente in Umfangsrichtung zu beiden Seiten jeweils von einer Quer- oder Schrägrille begrenzt werden und sich die Profilrille von der einen die beiden Profilblockelemente begrenzenden Quer- oder Schrägrille zu der anderen die beiden Profilblockelemente begrenzenden Quer- oder Schrägrille erstreckt, mit längs der Erstreckungsrichtung der Profilrille verändert ausgebildeten in Umfangsrichtung U des Fahrzeugreifens gemessenen Umfangssteifigkeiten beider Profilblockelemente, wobei ausgehend von der ersten Quer- oder Schrägrille zur zweiten Quer- oder Schrägrille die Umfangssteifigkeit des ersten Profilblockelementes zu- und die Umfangssteifigkeit des zweiten Profilblockelementes abnimmt, mit einem gegenüber dem Rillengrund der Quer- oder Schrägrille radial erhöhten Rillengrund der Profilrille, gemäß den Merkmalen von Anspruch 1, bei dem längs der gesamten Erstreckung der Profilrille im Rillengrund eine zusätzliche schmale Nut mit einer in radialer Richtung R gemessenen Nuttiefe $t_N$ ausgebildet ist, die sich ausgehend von der ersten Quer- oder Schrägrille bis zur zweiten Quer- oder Schrägrille diagonal durch die Profilrille verlaufend von der das zweite Profilblockelement begrenzenden Rillenwand der Profilrille bis zu der das erste Profilblockelement begrenzenden Rillenwand der Profilrille erstreckt.

Hierdurch werden innerhalb einer die beiden Profilblockelemente voneinander trennenden Profilrille beide angrenzenden Profilblockelemente jeweils in ihrem hinsichtlich Umfangssteifigkeiten schwächeren Erstreckungsbereich zusätzlich gestützt. Die Nut bewirkt die erforderliche Entkopplung der beiden Profilblockelemente, so dass diese die erforderliche Beweglichkeit aufweisen und der Rollwidersstand reduziert wird. Der Nutverlauf bewirkt, dass der zwischen Nut und erstem Profilblockelement ausgebildete erhöhte Rillengrund das erste Profilblockelement in dessen hinsichtlich der Umfangssteifigkeit geschwächten Erstreckungsbereich stützt und der zwischen Nut und zweitem Profilblockelement ausgebildete erhöhte Rillengrund das zweite Profilblockelement in dessen hinsichtlich der Umfangssteifigkeit geschwächten Erstreckungsbereich stützt, wobei zu beiden Profilblockelementen eine kontinuierliche Veränderung der Stützwirkung längs der Erstreckungsrichtung der Nut gesichert ist. Hierdurch werden in einfacher, platzsparender Weise lediglich durch eine einzige Maßnahme innerhalb einer Profilrille über den gesamten Erstreckungsbereich der Profilrille beide benachbarten Profilblockelemente in ihrer Umfangssteifigkeit mit fließendem Übergang vergleichmäßigt. Darüber hinaus bewirkt der Verlauf der zusätzlichen Nut, dass sich die beiden Profilblockelemente bei abgeplattetem Reifen beim Durchlaufen des Latsches gegenseitig über den gesamten Erstreckungsbereich der Profilrille in Umfangs- und in Querrichtung abstützen. Somit erfolgt über die gesamte Längserstreckung der Profilrille die Kraftübertragung in Umfangs- und Querrichtung zwischen den beiden Profilblockelementen, wodurch eine gleichmäßige Belastung unter Vermeidung von Lastspitzen erfolgt. Das Blockprofil wird über den gesamten Erstreckungsbereich der benachbarten Profilblockelemente gleichmäßig gestützt. Der lange zur Verfügung stehende Erstreckungsbereich der Profilrille, der vollständig zur Kraftübertragung zwischen den Profilblockelementen genutzt wird, ermöglicht eine erhöhte Kraftübertragung in Umfangs- und in Querrichtung und das bei vergleichmäßigtem Abrieb und reduziertem Rollwiderstand.

Besonders vorteilhaft ist die Ausbildung eines Laufflächenprofils gemäß den Merkmalen von Anspruch 2 mit einem weiteren in axialer Richtung A des Fahrzeugluftreifens zum ersten Profilblockelement benachbarten radial erhabenen Profilblockelement, die durch eine Profilrille voneinander beabstandet sind, wobei die beiden das erste Profilblockelement in Umfangsrichtung begrenzenden Quer- Schrägrillen in Verlängerung auch das weitere Profilblockelement jeweils in Umfangsrichtung begrenzen, wobei sich auch die Profilrille von der einen die beiden Profilblockelemente begrenzenden Quer- oder Schrägrille zu der anderen die beiden Profilblockelemente begrenzenden Quer- oder Schrägrille erstreckt, mit längs der Erstreckungsrichtung der Profilrille verändert ausgebildeten in axialer Richtung A des Fahrzeugreifens gemessenen Quersteifigkeiten beider Profilblockelemente, wobei ausgehend von der ersten Quer- oder Schrägrille zur zweiten Quer- oder Schrägrille die Quersteifigkeit des ersten Profilblockelementes zu- und die Quersteifigkeit des weiteren Profilblockelementes abnimmt, mit einem gegenüber dem Rillengrund der Quer- oder Schrägrille radial erhöhten Rillengrund der Profilrille, wobei längs der gesamten Erstreckung der Profilrille im Rillengrund eine zusätzliche schmale Nut mit einer in radialer Richtung R gemessenen Nuttiefe $t_N$ ausgebildet ist, die sich ausgehend von der ersten Quer- oder Schrägrille bis zur zweiten Quer- oder Schrägrille diagonal durch die Profilrille verlaufend von der das weitere Profilblockelement begrenzenden Rillenwand der Profilrille bis zu der das erste Profilblockelement begrenzenden Rillenwand der Profilrille erstreckt. Hierdurch kann die Querkraftübertragung des Fahrzeugreifens zusätzlich bei hoher Vergleichmäßigung erhöht und die Handlingeigenschaften bei gleichmäßigem Abrieb verbessert werden.

Besonders vorteilhaft ist die Ausbildung eines Laufflächenprofils gemäß den Merkmalen von Anspruch 3, wobei die Erstreckungsrichtung der Profilrille mit einer größeren Richtungskomponente in Umfangsrichtung U als in axialer Richtung A ausgebildet ist. Durch die stärkere Umfangsorientierung der Schrägnut kann eine erhöhte Seitenführung auf Schnee erzielt werden.

Besonders vorteilhaft ist die Ausbildung eines Laufflächenprofils gemäß den Merkmalen von Anspruch 4, wobei der Rillengrund der Profilrille mit längs seiner Erstreckung in Erstreckungsrichtung der Profilrille konstanter Rillentiefe $t_R$ ausgebildet ist, wobei die Rillentiefe $t_R$ in jedem Querschnitt senkrecht zur Erstreckungsrichtung der Profilrille jeweils der maximale radiale Abstand von der die beiden Profilblockelemente in radialer Richtung R des Reifens nach außen begrenzenden, die Straßenkontaktoberfläche bildenden Mantelfläche ist. Hierdurch können die beiden durch die Profilrille begrenzten Profilblockelemente zusätzlich gleichmäßige an ihren Randelementen versteift werden.

Besonders vorteilhaft ist die Ausbildung eines Laufflächenprofils gemäß den Merkmalen von Anspruch 5, wobei die Nut der Profilrille mit einer größeren längs ihrer Erstreckung quer zur Erstreckungsrichtung gemessenen Breite c als die Nut der Profilrille ausgebildet ist. Da während des Abplattungsvorgangs die Profilblockelemente in der Reifenmitte eine größere Relativbewegung machen müssen als in der Reifenschulter, kann diesem Umstand durch eine breitere Ausführung der Nut in der Reifenmitte, welche die Beweglichkeit dieser Profilelemente erhöht, einfach Rechung getragen werden.

Besonders vorteilhaft ist die Ausbildung eines Laufflächenprofils gemäß den Merkmalen von Anspruch 6, wobei die Nut längs ihrer Erstreckung mit einer quer zur Erstreckungsrichtung gemessenen Breite c ausgebildet ist mit 0,4mm $\leq$ c $\leq$ 1,5mm. Durch eine angepasste Breitenauslegung kann die notwendige Beweglichkeit der Profilblockelemente bei unterschiedlich runden Reifenkonturen eingestellt werden. Im angegebenen Wertebereich sind die bei PKW- und VAN-Reifen gewünschten Eigenschaften zuverlässig optimierbar.

Besonders vorteilhaft ist die Ausbildung eines Laufflächenprofils gemäß den Merkmalen von Anspruch 7, wobei die Breite c der Nut längs ihrer Erstreckung ein konstanter Wert ist. Die Relativbewegungen der Profilblockelemente, während des Abplattvorgangs, sind am Anfang der Nuten nahezu gleich zu denen an deren Auslauf. Somit lässt sich ein optimaler Abstützeffekt der Profilblockelemente durch eine gleich bleibende Breite c der trennenden Nut einfach erreichen.

Die Erfindung wird im Folgenden an Hand der in den Figuren 1 bis 7 dargestellten Ausführungsbeispiele näher erläutert. Hierin zeigen

Fig. 1    einen Umfangsabschnitt eines Laufstreifenprofils eines Fahrzeugluftreifens für Personenkraftwagen (Pkw) mit Wintereignung in Draufsicht, wobei zur Vereinfachung lediglich der axiale Erstreckungsbereich zwischen einer Reifenschulter und der Äquatorebene dargestellt ist,

Fig. 2    Schnittdarstellung einer zwei Profilblockelemente trennenden Profilrille gemäß Schnitt II-II von Fig. 1,

Fig. 3    Schnittdarstellung der Profilrille gemäß Schnitt III-III von Fig. 1,

Fig. 4    Profilrille gemäß Schnitt IV-IV von Fig. 1,

Fig. 5    Schnittdarstellung einer anderen zwei Profilblockelemente trennenden Profilrille gemäß Schnitt V-V von Fig. 1,

Fig. 6    Schnittdarstellung der anderen Profilrille gemäß Schnitt VI-VI von Fig. 1,

Fig. 7    Profilrille gemäß Schnitt VII-VII von Fig. 1.

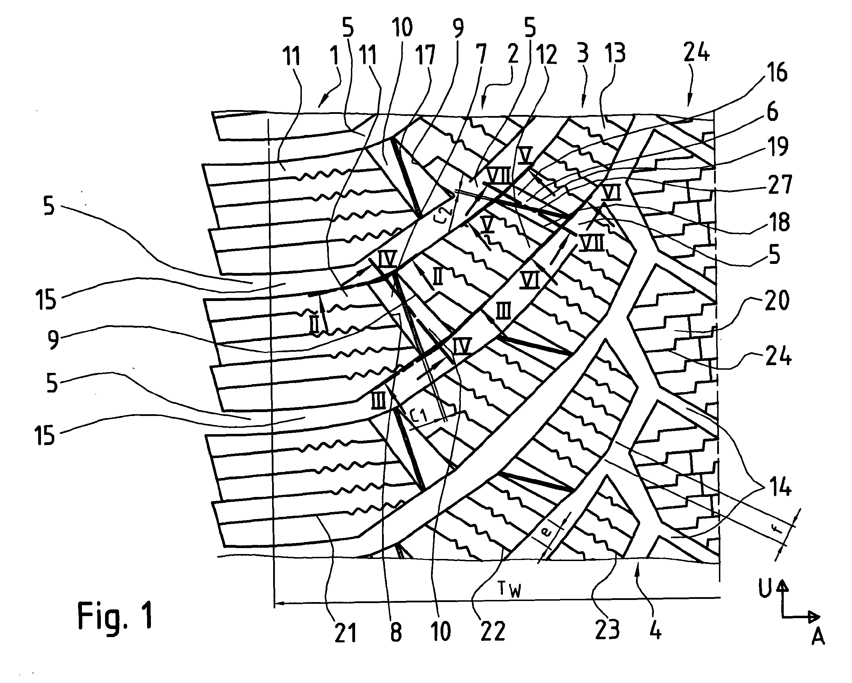

Fig. 1 zeigt das Laufstreifenprofil eines Fahrzeugluftreifens für Personenkraftwagen (Pkw) mit Wintereigenschaften, bei dem zur Vereinfachung lediglich eine axiale Hälfte mit einer im Bereich der linken Reifenschulter ausgebildeten Profilblockreihe 1, einer in axialer Richtung A des Fahrzeugluftreifens daneben angeordneten Profilblockreihe 2, einer in axialer Richtung A des Fahrzeugluftreifens neben der Profilblockreihe 1 angeordneten Profilblockreihe 3 und einer weiteren axial neben der Profilblockreihe 3 angeordneten bis zur Reifenäquatorebene reichenden Profilblockreihe 24 dargestellt ist. Die Profilblockreihe 1 erstreckt sich in Umfangsrichtung U über den gesamten Umfang des Fahrzeugluftreifens und ist in bekannter Weise aus einer Vielzahl von in Umfangsrichtung U hintereinander angeordneten und jeweils durch eine Querrille 5 voneinander beabstandeten Profilblockelementen 11 ausgebildet. Die Profilblockreihe 2 erstreckt sich in Umfangsrichtung U über den gesamten Umfang des Fahrzeugluftreifens und ist in bekannter Weise aus einer Vielzahl von in Umfangsrichtung U des Fahrzeugluftreifens über den Umfang verteilt angeordneten und jeweils durch eine der Querrillen 5 voneinander beabstandeten Profilblockelementen 12 ausgebildet. Die Profilblockreihe 3 erstreckt sich in Umfangsrichtung U über den gesamten Umfang des Fahrzeugluftreifens und ist in bekannter Weise aus einer Vielzahl von in Umfangsrichtung U des Fahrzeugluftreifens über den Umfang verteilt angeordneten und jeweils durch eine der Querrillen 5 voneinander beabstandeten Profilblockelementen 13 ausgebildet.Die Profilblockreihe 24 erstreckt sich in Umfangsrichtung U über den gesamten Umfang des Fahrzeugluftreifens und ist in bekannter Weise aus einer Vielzahl von in Umfangsrichtung U des Fahrzeugluftreifens über den Umfang verteilt angeordneten und jeweils durch eine der Querrillen 14 voneinander beabstandeten Profilblockelementen 20 ausgebildet.

Die Profilblockreihe 3 und die Profilblockreihe 24 sind in axialer Richtung A des Fahrzeugluftreifens durch eine in Umfangsrichtung U ausgerichtete, zickzack-förmig verlaufende und über den gesamten Umfang des Fahrzeugluftreifens erstreckte Umfangsrille 4 voneinander beabstandet. Die jeweils zwischen zwei in Umfangsrichtung U benachbarten Querrillen 5 in axialer Richtung A benachbart zu einander angeordneten Profilblockelemente 11 der Profilblockreihe 1 und Profilblockelemente 12 der Profilblockreihe 2 sind jeweils durch eine mit einer Erstreckungsrichtung mit einer größerer Richtungskomponente in Umfangsrichtung als in axialer Richtung - beispielsweise durch eine schräg zur Umfangsrichtung unter Einschluss eines Winkels von ca. 20° zur Umfangsrichtung - ausgerichteten Umfangsrille 7 in axialer Richtung A voneinander getrennt angeordnet. Die jeweils zwischen zwei in Umfangsrichtung U benachbarten Querrillen 5 in axialer Richtung A benachbart zu einander angeordneten Profilblockelemente 12 der Profilblockreihe 2 und Profilblockelemente 13 der Profilblockreihe 3 sind jeweils durch eine mit einer Erstreckungsrichtung mit einer größerer Richtungskomponente in axialer Richtung als in Umfangsrichtung - beispielsweise mit schräg zur Umfangsrichtung unter Einschluss eines Winkels von ca. 50° zur Umfangsrichtung - ausgerichteten Umfangsrille 6 in axialer Richtung A voneinander getrennt angeordnet.

Die Querrillen 5 verlaufen parallel zueinander und erstrecken sich von einer axialen Position außerhalb der Bodenaufstandsfläche TW unter Einschluss eines Winkels von ca. 5° zur axialen Richtung A mit in der Darstellung nach oben gerichteter Umfangsorientierung geradlinig über den gesamten Erstreckungsbereich der Profilblockreihe 1 zu einer Knickstelle. Ab der Knickstelle verlaufen die Querrillen 5 wiederum unter Einschluss eines Neigungswinkels von ca. 40° zur axialen Richtung A durch die Profilblockreihen 2 und 3 und münden in die Umfangsrille 4 in einer der Profilblockreihe 3 zu gewandten Knickstelle der Zickzackform.

Diese Ausbildung bewirkt, dass die Profilblockelemente 11 in der dargestellten Ausführung längs der Erstreckung der Umfangsrille 7 mit ihrem zu der dem Profilblockelement 11 in der in Figur 1 in Umfangsrichtung nach unten dargestellten angrenzenden Querrille 5 weisenden Erstreckungsabschnitt eine größere Quersteifigkeit als in ihrem zu der dem Profilblockelement 11 in Umfangsrichtung U jeweils nach oben dargestellt angrenzenden Querrille 5 weisenden Erstreckungsabschnitt aufweisen und dass die Profilblockelemente 12 längs der Erstreckung der Umfangsrille 7 mit ihrem zu der dem Profilblockelement 12 in der in Figur 1 in Umfangsrichtung U nach unten angrenzenden Querrille 5 weisenden Erstreckungsabschnitt eine geringere Quersteifigkeit als in ihrem zu der dem Profilblockelement 12 in der in Figur 1 in Umfangsrichtung U nach oben angrenzenden Querrille 5 weisenden Erstreckungsabschnitt aufweisen.

Außerdem weisen die Profilblockelemente 12 in der dargestellten Ausführung längs der Erstreckung der Umfangsrille 6 mit ihrem zu der dem Profilblockelement 12 in der in Figur 1 in Umfangsrichtung nach unten angrenzenden Querrille 5 weisenden Erstreckungsabschnitt eine kleinere Umfangssteifigkeit als in ihrem zu der dem Profilblockelement 12 in Umfangsrichtung U jeweils nach oben angrenzenden Querrille 5 weisenden Erstreckungsabschnitt auf und die Profilblockelemente 13 weisen längs der Erstreckung der Umfangsrille 6 mit ihrem zu der dem Profilblockelement 13 in der in Figur 1 in Umfangsrichtung U nach unten angrenzenden Querrille 5 weisenden Erstreckungsabschnitt eine größere Umfangssteifigkeit als in dem zu der dem Profilblockelement 13 in ihrer in Figur 1 in Umfangsrichtung U nach oben angrenzenden Querrille 5 weisenden Erstreckungsabschnitt auf.

Die Profilblockelemente 11 sind auf ihrer radial äußeren, die Straßenkontaktfläche bildenden Mantelfläche mit parallelen oder nahezu parallelen Feineinschnitten 21 ausgebildet, die sich mit ihrem Haupterstreckungsverlauf parallel oder nahezu parallel zu den Querrillen 5 von außerhalb der axialen Erstreckung TW der Bodenaufstandsfläche bis in die Umfangsrille 7 hinein erstrecken. Die Profilblockelementen 12 sind auf ihrer radial äußeren, die Straßenkontaktfläche bildenden Mantelfläche mit parallelen Feineinschnitten 22 ausgebildet, die sich mit ihrem Haupterstreckungsverlauf ausgehend von der einen das Profilblockelement 12 begrenzenden Querrille 5 zur anderen das Profilblockelement begrenzenden Querrille 5 im Wesentlichen parallel zur Umfangsrille 6 und im Abstand e zu einander erstrecken. Die Profilblockelementen 13 sind auf ihrer radial äußeren, die Straßenkontaktfläche bildenden Mantelfläche mit parallelen Feineinschnitten 23 ausgebildet, die sich mit ihrem Haupterstreckungsverlauf ausgehend von der einen das Profilblockelement 12 begrenzenden Querrille 5 zur anderen das Profilblockelement begrenzenden Querrille 5 im Wesentlichen parallel und im Abstand f zu einander erstrecken. In den Profilblockelementen 20 sind in ihrem Verlauf parallel zueinander ausgerichtete Feineinschnitte 24 ausgebildet, die sich in axialer Richtung A durch die Profilblockelemente 20 hindurch erstrecken.

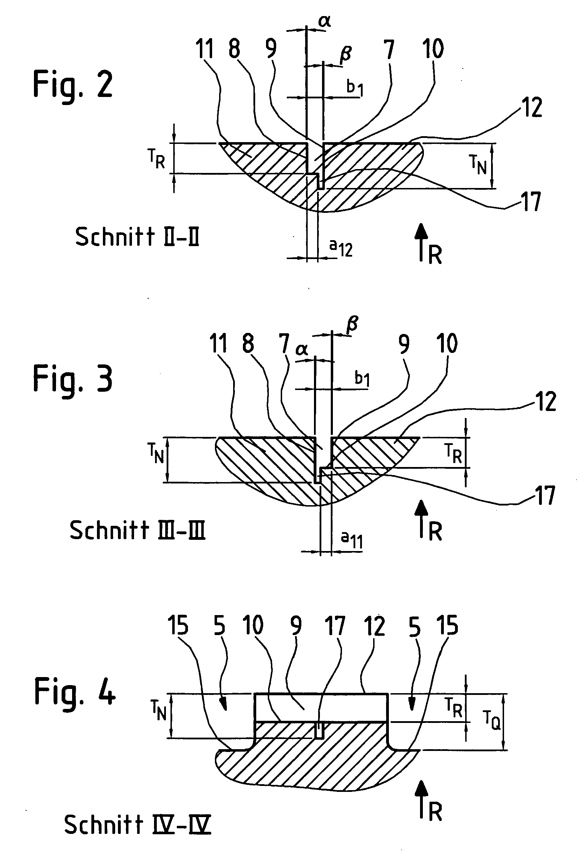

Wie in Fig. 1, 2, 3 und 4 zu erkennen sind, sind die Querrillen 5 nach radial innen jeweils mit einem Rillengrund 15 begrenzt, aus dem sich jeweils beiderseits des Rillengrundes 15 eine Rillenwand radial nach außen bis zu der die Straßenkontaktfläche bildenden Mantelfläche erstreckt, wobei die Querrille 5 jeweils das in der in Figur 1 nach oben dargestellten Orientierung der Umfangsrichtung U der Querrille 5 in Umfangsrichtung U nachgeordnete Profilblockelement 11,12 bzw. 13 mit ihrer dem Rillengrund 15 nachgeordneten Rillenwand und die dem Rillengrund 15 vorgeordnete Rillenwand das der Querrille 5 vorgeordnete Profilblockelement 11,12 bzw. 13 begrenzt. Die Querrillen 5 sind mit einer Rillentiefe $T_Q$ ausgebildet, die in jeder Querschnittsebene senkrecht zur Erstreckungsrichtung einer Querrille 5 jeweils die maximale radiale Erstreckung zwischen der radial äußeren, die beiden angrenzenden Profilblockelemente 11 bzw. 12 bzw. 13 begrenzenden Mantelfläche und dem tiefsten Punkt des Rillengrundes 5 angibt.

Ebenso sind die Umfangsrillen 7 über ihren gesamten Erstreckungsbereich in Umfangsrichtung U zwischen zwei hintereinander angeordneten Querrillen 5 mit einem in Richtung der Umfangsrille 7 erstreckten die Umfangsrille 7 nach radial innen begrenzenden Rillengrund 10 ausgebildet, aus dem sich zum jeweiligen Profilblockelement 11 hin eine das Profilblockelement 11 zur Umfangsrille 7 begrenzende Rillenwand 8 und zum Profilblockelement 12 hin eine das Profilblockelement 12 zur Umfangsrille 7 hin begrenzende Rillenwand 9 nach radial außen erstreckt. Die beiden Rillenwände 8 und 9 erstrecken sich dabei aus dem Rillengrund 10 nach radial außen bis zu der die radial äußere die Straßenkontaktfläche bildenden Mantelfläche der beiden die Umfangsrille 7 begrenzenden Profilblockelemente 11 und 12. Die Umfangsrille 7 ist dabei mit einer Rillentiefe $T_R$ ausgebildet, wobei die Rillentiefe $T_R$ in allen Querschnittsebenen senkrecht zur Haupterstreckungsrichtung der Umfangsrille 7 jeweils den radialen Abstand zwischen der die beiden von der Umfangsrille 7 getrennten Profilblockelemente 11 und 12 nach radial außen begrenzenden, die Straßenkontaktfläche bildenden Mantelfläche und dem jeweils tiefsten Punkt des Rillengrundes 10 angibt.

Der Rillengrund 10 ist, wie in den Figuren 1 bis 4 dargestellt, quer zur Erstreckungsrichtung der Rille geradlinig und eben ausgebildet.

Die Umfangsrille 7 ist mit einer Rillenbreite b ausgebildet, die sich im dargestellten Ausführungsbeispiel über die gesamte radiale Erstreckung der Umfangsrille 7 mit konstanter Breite b erstreckt. Im dargestellten Ausführungsbeispiel der Figuren 1 bis 4 weisen die Rillenwände 8 und 9 in den Querschnittsverläufen senkrecht zur Erstreckungsrichtung der Umfangsrille 7 Neigungswinkel $\alpha$ bzw. Neigungswinkel ß zur radialen Richtung R auf, wobei für den Neigungswinkel $\alpha$ der Rillenwand 8 in dargestellter Ausführung $\alpha = 0°$ und für den Neigungswinkel $\beta$ der Rillenwand 9 ß=0 gewählt ist.

Die Breite b der Rille ist im dargestellten Ausführungsbeispiel mit b = 3mm gewählt

Im Rillengrund 10 der Umfangsrille 7 ist zusätzlich eine Nut 17 der Breite $c_1$ ausgebildet, die sich in Erstreckungsrichtung der Umfangsrille 7 längs der gesamten Erstreckung der Umfangsrille 7 von Querrille 5 zu Querrille 5 diagonal durch die Umfangsrille 7 hindurch verlaufend erstreckt. Ausgehend von der Einmündung der Umfangsrille 7 in die der Umfangsrille 7 vorgeordnete Querrille 5, in welcher die Nut 17 unmittelbar in radialer Verlängerung der Rillenwand 8 an das Profilblockelement 11 grenzt und mit Abstand $a_{11}$ mit $a_{11} > 0$mm zur Rillenwand 9 ausgebildet ist, bis zur Einmündung der Umfangsrille 7 in die nachgeordnete Querrille 5, in welcher die Nut 17 unmittelbar in radialer Verlängerung der Rillenwand 9 an das Profilblockelement 12 grenzt und mit Abstand $a_{12}$ mit $a_{12} > 0$mm zur Rillenwand 8 ausgebildet ist, erstreckt sich die Nut 17 längs der Erstreckung der Umfangsrille 7 geradlinig und quert dabei die Umfangsrille 7 über deren gesamte Breite b.

Die Nut 17 ist jeweils in den Querschnitten senkrecht zur Erstreckungsrichtung der Nut 17 mit einer Breite $c_1$ ausgebildet, die im dargestellten Ausführungsbeispiel über die gesamte radiale Erstreckung der Nut 17 konstant ist.

Die Nut 17 ist dabei mit einer Nuttiefe $T_N$ ausgebildet, wobei die Nuttiefe $T_N$ in allen Querschnittsebenen senkrecht zur Haupterstreckungsrichtung der Umfangsrille 7 jeweils den radialen Abstand zwischen der die beiden von der Umfangsrille 7 getrennten Profilblockelemente 11 und 12 nach radial außen begrenzenden, die Straßenkontaktfläche bildenden Mantelfläche und dem jeweils tiefsten Punkt de Nut 17 angibt.

Die Breite $c_1$ ist mit $0{,}4$ mm $\leq c_1 \leq 1{,}5$mm gewählt.

Für den Abstand $a_{11}$ gilt $(a_{11} + c_1) = b$ und für den Abstand $a_1$ gilt $(a_{12} + c_1) = b$ mit $a_{11} \geq 3 c_1$ und $a_{12} \geq 3 c_1$ jeweils gemessen im Rillengrund 10.

Ebenso sind die Umfangsrillen 6 über ihren gesamten Erstreckungsbereich in Umfangsrichtung U zwischen zwei hintereinander angeordneten Querrillen 5 mit einem in Richtung der Umfangsrille 6 erstreckten die Umfangsrille 6 nach radial innen begrenzenden Rillengrund 16 ausgebildet, aus dem sich zum jeweiligen Profilblockelement 12 hin eine das Profilblockelement 12 zur Umfangsrille 6 begrenzende Rillenwand 18 und zum Profilblockelement 13 hin eine das Profilblockelement 13 zur Umfangsrille 6 hin begrenzende Rillenwand 19 nach radial außen erstreckt. Die beiden Rillenwände 18 und 19 erstrecken sich dabei aus dem Rillengrund 16 nach radial außen bis zu der die radial äußere die Straßenkontaktfläche bildenden Mantelfläche der beiden die Umfangsrille 6 begrenzenden Profilblockelemente 12 und 13. Die Umfangsrille 6 ist dabei mit einer Rillentiefe $T_R$ ausgebildet, wobei die Rillentiefe $T_R$ in allen Querschnittsebenen senkrecht zur Haupterstreckungsrichtung der Umfangsrille 6 jeweils den radialen Abstand zwischen der die beiden von der Umfangsrille 6 getrennten Profilblockelemente 12 und 13 nach radial außen begrenzenden, die Straßenkontaktfläche bildenden Mantelfläche und dem jeweils tiefsten Punkt des Rillengrundes 16 angibt.

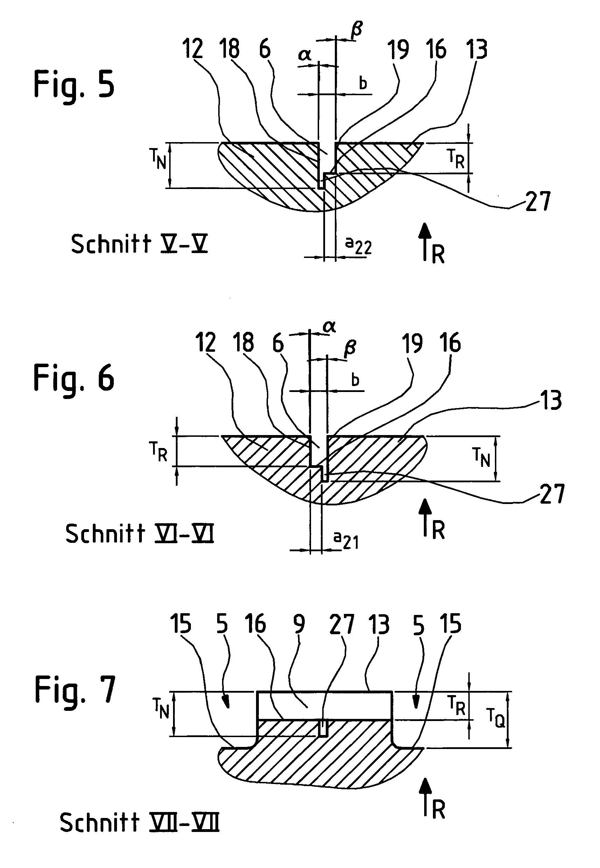

Der Rillengrund 16 ist, wie in den Figuren 1, 5 bis 7 dargestellt, quer zur Erstreckungsrichtung der Rille 6 geradlinig und eben ausgebildet.

Die Umfangsrille 6 ist mit einer Rillenbreite b ausgebildet, die sich im dargestellten Ausführungsbeispiel über die gesamte radiale Erstreckung der Umfangsrille 7 mit konstanter Breite b erstreckt. Im dargestellten Ausführungsbeispiel der Figuren 1, 5 bis 7 weisen die Rillenwände 18 und 19 in den Querschnittsverläufen senkrecht zur Erstreckungsrichtung der Umfangsrille 6 Neigungswinkel $\alpha$ bzw. Neigungswinkel $\beta$ zur radialen Richtung R auf, wobei für den Neigungswinkel $\alpha$ der Rillenwand 8 in dargestellter Ausführung $\alpha = 0°$ und für den Neigungswinkel $\beta$ der Rillenwand 9 $\beta = 0$ gewählt ist.

Die Breite b der Rille ist im dargestellten Ausführungsbeispiel mit b = 3mm gewählt

Im Rillengrund 16 der Umfangsrille 6 ist zusätzlich eine Nut 27 der Breite $c_2$ ausgebildet, die sich in Erstreckungsrichtung der Umfangsrille 6 längs der gesamten Erstreckung der Umfangsrille 6 von Querrille 5 zu Querrille 5 diagonal durch die Umfangsrille 6 hindurch verlaufend erstreckt. Ausgehend von der Einmündung der Umfangsrille 6 in die der Umfangsrille 6 vorgeordnete Querrille 5, in welcher die Nut 27 unmittelbar in radialer Verlängerung der Rillenwand 19 an das Profilblockelement 13 grenzt und mit Abstand $a_{21}$ mit $a_{21} > 0$mm zur Rillenwand 18 ausgebildet ist, bis zur Einmündung der Umfangsrille 6 in die nachgeordnete Querrille 6, in welcher die Nut 27 unmittelbar in radialer Verlängerung der Rillenwand 18 an das Profilblockelement 12 grenzt und mit Abstand $a_{22}$ mit $a_{22} > 0$mm zur Rillenwand 19 ausgebildet ist, erstreckt sich die Nut 27 längs der Erstreckung der Umfangsrille 6 geradlinig und quert dabei die Umfangsrille 6 über deren gesamte Breite b.

Die Nut 27 ist jeweils in den Querschnitten senkrecht zur Erstreckungsrichtung der Nut 27 mit einer Breite $c_2$ ausgebildet, die im dargestellten Ausführungsbeispiel über die gesamte radiale Erstreckung der Nut 17 konstant ist.

Die Nut 27 ist dabei mit einer Nuttiefe $T_N$ ausgebildet, wobei die Nuttiefe $T_N$ in allen Querschnittsebenen senkrecht zur Haupterstreckungsrichtung der Umfangsrille 6 jeweils den radialen Abstand zwischen der die beiden von der Umfangsrille 6 getrennten Profilblockelemente 12 und 13 nach radial außen begrenzenden, die Straßenkontaktfläche bildenden Mantelfläche und dem jeweils tiefsten Punkt der Nut 27 angibt.

Die Breite $c_2$ ist mit $0{,}4$ mm $\leq c_2 \leq 1{,}5$mm gewählt.

Für den Abstand $a_{21}$ gilt $(a_{21} + c_2) = b$ und für den Abstand $a_{22}$ gilt $(a_{22} + c_2) = b$ mit $a_{21} \geq 3 c_2$ und $a_{22} \geq 3 c_2$ jeweils gemessen im Rillengrund 16.

In dem dargestellten Ausführungsbeispiel ist $c_2 > c_1$ gewählt. Beispielsweise ist $c_2 = 0{,}7$ mm und $c_1 = 0{,}6$ mm gewählt.

Die für die Nuttiefe $T_N$ und die Rillentiefe $T_R$ gilt: $T_R < T_N$. Für die Nuttiefe $T_N$ und die Tiefe der Rillentiefe $T_Q$ der benachbarten Querrillen 5 im Mündungsbereich der Umfangsrille 6 und die Umfangsrille 7 in die jeweilige Querrille 5 gilt:

$$(0{,}1\ T_Q) \leq T_N \leq (1{,}2\ T_Q).$$

Für $T_Q$ gilt: 8mm $\leq T_Q \leq$ 10mm.

Für $T_R$ gilt: $(0,05\ T_Q) \leq T_R \leq (0,95\ T_Q)$.

In den dargestellten Ausführungsbeispielen gilt $T_N < T_Q$.

In den dargestellten Ausführungsbeispielen ist $T_N$ mit $T_N = (T_Q - 3{,}5mm)$ ausgebildet.

In den Fig.1 bis Fig.7 ist eine Ausführung dargestellt mit $\alpha=0°$ und $\beta=0°$. In anderer - nicht dargestellter Ausführung ist $\alpha$ und $\beta$ größer als 0° gewählt, wobei $\alpha\leq15°$ und $\beta\leq15°$ gewählt ist.

In einer nicht dargestellten alternative Ausführung ist der Neigungswinkel $\alpha$ der größer ist als der Neigungswinkel $\beta$ gewählt, so dass die Breite der Umfangsrille 7 bzw. 6 ausgehend von der Breite b im Rillengrund 10 bzw. 16 nach radial außen zunimmt.

In den dargestellten Figuren und der zugehörigen oben genannten Beschreibung sind die Umfangsrille 6 und die Umfangsrille 7 jeweils mit einer konstanten Breite b ausgebildet.

In alternativer nicht dargestellter Ausführung ist die Umfangsrille 6 gegenüber der Umfangsrille 7 mit abweichender Breite b ausgebildet.

In anderer nicht dargestellter Ausführung ist die Breite b der Umfangsrille 6 mit längs ihrer Erstreckung stetig zunehmender Breite ausgebildet. In anderer nicht dargestellter Ausführung ist die Umfangsrille 7 mit längs Ihrer Erstreckung stetig zunehmender Breite ausgebildet.

In einer alternativen Ausbildung ist die Tiefe $T_N$ der Nut 17 bzw. Nut 27 jeweils über die gesamte Erstreckung der Nut 17 bzw. 27 konstant ausgebildet. In einer anderen nicht dargestellten Ausführung ist die Nut 17 mit einer sich über die Erstreckungslänge der Nut 17 verändernden Tiefe $T_N$ ausgebildet. In anderem Ausführungsbeispiel ist die Tiefe der Nut 27 mit sich längs der Erstreckung der Nut 27 verändernder Tiefe $T_N$ ausgebildet.

Wie in Fig. 1 dargestellt ist, ist in einer Ausführung der Abstand zwischen Umfangsrille 6 und der der Umfangsrille 6 nächstliegenden Feineinschnitt 23 des durch die Umfangsrille 6 begrenzten Profilblockelements 12 größer als der Abstand e und der Abstand zwischen der Umfangsrille 6 und dem der Umfangsrille 6 nächstgelegenen Feineinschnitt 23 des Profiblockelementes 13 größer als der Abstand f.

**Bezugszeichenliste** (Teil der Beschreibung)

| | |
|---|---|
| 1 | Profilblockreihe |
| 2 | Profilblockreihe |
| 3 | Profilblockreihe |
| 4 | Umfangsrille |
| 5 | Querrille |
| 6 | Schrägrille |
| 7 | Umfangsrille |
| 8 | Rillenwand |
| 9 | Rillenwand |
| 10 | Rillengrund |
| 11 | Profilblockelement |
| 12 | Profilblockelement |
| 13 | Profilblockelement |
| 14 | Querrille |
| 15 | Rillengrund |
| 16 | Rillengrund |
| 17 | Nut |
| 18 | Rillenwand |
| 19 | Rillenwand |
| 20 | Profilblockelement |
| 21 | Feineinschnitt |
| 22 | Feineinschnitt |
| 23 | Feineinschnitt |
| 24 | Feineinschnitt |
| 25 | |
| 26 | |
| 27 | Nut |

**Patentansprüche**

1. Laufflächenprofil eines Fahrzeugreifens - insbesondere eines Fahrzeugluftreifens - mit zwei in axialer Richtung A des Fahrzeugluftreifens benachbarten radial erhabenen Profilblockelementen (12,13), die durch eine Profilrille (6) voneinander beabstandet sind, deren Erstreckungsrichtung mit einer größere Richtungskomponente in axialer Richtung A als in Umfangsrichtung U ausgebildet ist, wobei die beiden Profilblockelemente (12,13) in Umfangsrichtung zu beiden Seiten jeweils von einer Quer- oder Schrägrille (5) begrenzt werden und sich die Profilrille (6) von der einen die beiden Profilblokelemente (12,13) begrenzenden Quer- oder Schrägrille (5) zu der anderen die beiden Profilblockelemente (12,13) begrenzenden Quer- oder Schrägrille (5) erstreckt, mit längs der Erstreckungsrichtung der Profilrille (6) verändert ausgebildeten in Umfangsrichtung U des Fahrzeugreifens gemessenen Umfangssteifigkeiten beider Profilblockelemente (12,13), wobei ausgehend von der ersten Quer- oder Schrägrille (5) zur zweiten Quer- oder Schrägrille (5) die Umfangssteifigkeit des ersten Profilblockelementes (12) zu- und die Umfangssteifigkeit des zweiten Profilblockelementes (13) abnimmt, mit einem gegenüber dem Rillengrund (15) der Quer- oder Schrägrille (5) radial erhöhten Rillengrund (16) der Profilrille (6),
**dadurch gekennzeichnet,**
**dass** längs der gesamten Erstreckung der Profilrille (6) im Rillengrund (16) eine zusätzliche schmale Nut (27) mit einer in radialer Richtung R gemessenen Nuttiefe $t_N$ ausgebildet ist, die sich ausgehend von der ersten Quer- oder Schrägrille (5) bis zur zweiten Quer- oder Schrägrille (5) diagonal durch die Profilrille (6) verlaufend von der das zweite Profilblockelement (13) begrenzenden Rillenwand (19) der Profilrille (6) bis zu der das erste Profilblockelement (12) begrenzenden Rillenwand (18) der Profilrille (6) erstreckt.

2. Laufflächenprofil gemäß den Merkmalen von Anspruch 1 oder 2,
mit einem weiteren in axialer Richtung A des Fahrzeugluftreifens zum ersten Profilblockelement (12) benachbarten radial erhabenen Profilblockelement (11), die durch eine Profilrille (7) voneinander beabstandet sind, wobei die beiden das erste Profilblockelement (12) in Umfangsrichtung begrenzenden Quer- Schrägrillen (5) in Verlängerung auch das weitere Profilblockelement (11) jeweils in Umfangsrichtung begrenzen, wobei sich auch die Profilrille (7) von der einen die beiden Profilblockelemente (12,11) begrenzenden Quer- oder Schrägrille (5) zu der anderen die beiden Profilblockelemente (12,11) begrenzenden Quer- oder Schrägrille (5) erstreckt, mit längs der Erstreckungsrichtung der Profilrille (7) verändert ausgebildeten in axialer Richtung A des Fahrzeugreifens gemessenen Quersteifigkeiten beider Profilblockelemente (12,11), wobei ausgehend von der ersten Quer- oder Schrägrille (5) zur zweiten Quer- oder Schrägrille (5) die Quersteifigkeit des ersten Profilblockkelementes (12) zu- und die Quersteifigkeit des weiteren Profilblockelementes (11) abnimmt, mit einem gegenüber dem Rillengrund (15) der Quer- oder Schrägrille (5) radial erhöhten Rillengrund (10) der Profilrille (7),
wobei längs der gesamten Erstreckung der Profilrille (7) im Rillengrund (10) eine zusätzliche schmale Nut (17) mit einer in radialer Richtung R gemessenen Nuttiefe $t_N$ ausgebildet ist, die sich ausgehend von der ersten Quer- oder Schrägrille (5) bis zur zweiten Quer- oder Schrägrille (5) diagonal durch die Profilrille (7) verlaufend von der das weitere Profilblockelement (11) begrenzenden Rillenwand (8) der Profilrille (7) bis zu der das erste Profilblockelement (12) begrenzenden Rillenwand (9) der Profilrille (7) erstreckt.

3. Laufflächenprofil gemäß den Merkmalen von Anspruch 2,
wobei die Erstreckungsrichtung der Profilrille (7) mit einer größeren Richtungskomponente in Umfangsrichtung U als in axialer Richtung A ausgebildet ist.

4. Laufflächenprofil gemäß den Merkmalen von Anspruch 1,
wobei der Rillengrund (16) der Profilrille (6) mit längs seiner Erstreckung in Erstreckungsrichtung der Profilrille (6) konstanter Rillentiefe $t_R$ ausgebildet ist, wobei die Rillentiefe $t_R$ in jedem Querschnitt senkrecht zur Erstrekkungsrichtung der Profilrille (6) jeweils der maximale radiale Abstand von der die beiden Profilblockelemente (12,13) in radialer Richtung R des Reifens nach außen begrenzenden, die Straßenkontaktoberfläche bildenden Mantelfläche ist.

5. Laufflächenprofil gemäß den Merkmalen von Anspruch 2,
wobei die Nut (27) der Profilrille (6) mit einer größeren längs ihrer Erstreckung quer zur Erstreckungsrichtung gemessenen Breite c als die Nut (17) der Profilrille (7) ausgebildet ist.

6. Laufflächenprofil gemäß den Merkmalen von einem oder mehreren der vorangegangenen Ansprüche,
wobei die Nut (17,27) längs ihrer Erstreckung mit einer quer zur Erstreckungsrichtung gemessenen Breite c ausgebildet ist mit $0{,}4mm \leq c \leq 1{,}5mm$.

7. Laufflächenprofil gemäß den Merkmalen von Anspruch 6,
wobei die Breite c der Nut (17,27) längs ihrer Erstreckung ein konstanter Wert ist.

**Claims**

1. Tread profile of a vehicle tyre, in particular of a vehicle pneumatic tyre, having two profile block elements (12, 13) which are adjacent in the axial direction A of the vehicle pneumatic tyre, are raised in the radial direction and are spaced apart from one another by a profile groove (6) whose direction of extent is formed with a larger directional component in the axial direction A than in the circumferential direction U, wherein the two profile block elements (12, 13) are bounded on each side in the circumferential direction by in each case a transverse groove or oblique groove (5), and the profile groove (6) extends from the one transverse groove or oblique groove (5) which bounds the two profile block elements (12, 13) to the other transverse groove or oblique groove (5) which bounds the two profile block elements (12, 13), having degrees of circumferential rigidity, which are embodied in a changing fashion along the direction of extent of the profile groove (6) and measured in the circumferential direction U of the vehicle tyre, of the two profile block elements (12, 13), wherein the circumferential rigidity of the first profile block element (12) increases starting from the first transverse groove or oblique groove (5) to the second transverse groove or oblique groove (5), and the circumferential rigidity of the second profile block element (13) decreases, with a groove base (16) of the profile groove (6) which is raised in the radial direction compared to the groove base (15) of the transverse groove or oblique groove (5),
**characterized**
**in that** an additional narrow groove (27) with a groove depth $t_N$ which is measured in the radial direction R is formed in the groove base (16), along the entire extent of the profile groove (6), and extends starting from the first transverse groove or oblique groove (5) as far as the second transverse groove or oblique groove (5), running diagonally through the profile groove (6) from the groove wall (19), bounding the second profile block element (13), of the profile groove (6) as far as the groove wall (18), bounding the first profile block element (12), of the profile groove (6).

2. Tread profile according to the features of Claim 1, having a further profile block element (11) which is adjacent to the first profile block element (12) in the axial direction A of the vehicle pneumatic tyre and is raised in the radial direction, which block elements (11, 12) are spaced apart from one another by a profile groove (7), wherein the two transverse/oblique grooves (5), which bound the first profile block element (12) in the circumferential direction, also bound, in their extension, the further profile block element (11) in each case in the circumferential direction, wherein the profile groove (7) also extends from the one transverse groove or oblique groove (5) which bounds the two profile block elements (12, 11) to the other transverse groove or oblique groove (5) which bounds the two profile block elements (12, 11), having degrees of transverse rigidity, which are embodied in a changing fashion along the direction of extent of the profile groove (7) and measured in the axial direction A of the vehicle tyre, of the two profile block elements (12, 11), wherein the transverse rigidity of the first profile block element (12) increases starting from the first transverse groove or oblique groove (5) to the second transverse groove or oblique groove (5), and the transverse rigidity of the further profile block element (11) decreases, with a groove base (10) of the profile groove (7) which is raised in the radial direction compared to the groove base (15) of the transverse groove or oblique groove (5),
wherein an additional narrow groove (17) with a groove depth $t_N$ which is measured in the radial direction R is formed in the groove base (10), along the entire extent of the profile groove (7), and extends starting from the first transverse groove or oblique groove (5) as far as the second transverse groove or oblique groove (5), running diagonally through the profile groove (7) from the groove wall (8), bounding the further profile block element (11), of the profile groove (7) as far as the groove wall (9), bounding the first profile block element (12), of the profile groove (7).

3. Tread profile according to the features of Claim 2, wherein the direction of extent of the profile groove (7) is formed with a larger directional component in the circumferential direction U than in the axial direction A.

4. Tread profile according to the features of Claim 1, wherein the groove base (16) of the profile groove (6) is formed with a groove depth $t_R$ which is constant along its extent in the direction of extent of the profile groove (6), wherein, in each cross section perpendicularly to the direction of extent of the profile groove (6), the groove depth $t_R$ is in each case the maximum radial distance from the lateral surface which outwardly bounds the two profile block elements (12, 13) in the radial direction R of the tyre and forms the road contact surface.

5. Tread profile according to the features of Claim 2, wherein the groove (27) of the profile groove (6) is formed with a larger width c measured along its extent transversely with respect to the direction of extent than the groove (17) of the profile groove (7).

6. Tread profile according to the features of one or more of the preceding claims,
wherein along its extent the groove (17, 27) is formed with a width c which is measured transversely with respect to the direction of extent, where 0.4 mm $\leq$ c $\leq$ 1.5 mm.

7. Thread profile according to the features of Claim 6, wherein the width c of the groove (17, 27) is a constant value along its extent.

**Revendications**

1. Profil de bande de roulement d'un bandage de véhicule, en particulier d'un pneu de véhicule, comprenant deux éléments de bloc profilé (12, 13) rehaussés radialement adjacents dans la direction axiale A du pneu de véhicule, lesquels sont espacés l'un de l'autre par une gorge profilée (6), dont la direction d'étendue est réalisée avec une composante directionnelle plus grande dans la direction axiale A que dans la direction périphérique U, les deux éléments de bloc profilé (12, 13) étant limités dans la direction périphérique des deux côtés à chaque fois par une gorge transversale ou oblique (5) et la gorge profilée (6) s'étendant depuis l'une des gorges transversales ou obliques (5) limitant les deux éléments de bloc profilé (12, 13) jusqu'à l'autre gorge transversale ou oblique (5) limitant les deux éléments de bloc profilé (12, 13), avec des rigidités périphériques des deux éléments de bloc profilé (12, 13) réalisées de manière modifiée le long de la direction d'étendue de la gorge profilée (6), mesurées dans la direction périphérique U du pneu de véhicule, la rigidité périphérique du premier élément de bloc profilé (12) augmentant, et la rigidité périphérique du deuxième élément de bloc profilé (13) diminuant, à partir de la première gorge transversale ou oblique (5) jusqu'à la deuxième gorge transversale ou oblique (5), avec un fond de gorge (16) de la gorge profilée (6) rehaussé radialement par rapport au fond de gorge (15) de la gorge transversale ou oblique (5),

**caractérisé en ce que**

le long de toute l'étendue de la gorge profilée (6) dans le fond de gorge (16) est réalisée une rainure supplémentaire étroite (27) avec une profondeur de rainure $t_N$ mesurée dans la direction radiale R, laquelle rainure supplémentaire étroite s'étend à partir de la première gorge transversale ou oblique (5) jusqu'à la deuxième gorge transversale ou oblique (5) en s'étendant en diagonale à travers la gorge profilée (6) depuis la paroi de gorge (19) de la gorge profilée (6) limitant le deuxième élément de bloc profilé (13) jusqu'à la paroi de gorge (18) de la gorge profilée (6) limitant le premier élément de bloc profilé (12).

2. Profil de bande de roulement selon les caractéristiques de la revendication 1, comprenant un élément de bloc profilé supplémentaire (11) rehaussé radialement adjacent dans la direction axiale A du pneu de véhicule au premier élément de bloc profilé (12), lesquels sont espacés l'un de l'autre par une gorge profilée (7), les deux gorges transversales ou obliques (5) limitant le premier élément de bloc profilé (12) dans la direction périphérique limitant dans le prolongement également l'élément de bloc profilé supplémentaire (11) à chaque fois dans la direction périphérique, la gorge profilée (7) s'étendant aussi depuis l'une des gorges transversales ou obliques (5) limitant les deux éléments de bloc profilé (12, 11) jusqu'à l'autre gorge transversale ou oblique (5) limitant les deux éléments de bloc profilé (12, 11), avec des rigidités transversales des deux éléments de bloc profilé (12, 11) réalisées de manière modifiée le long de la direction d'étendue de la gorge profilée (7), mesurées dans la direction axiale A du pneu de véhicule, la rigidité transversale du premier élément de bloc profilé (12) augmentant, et la rigidité transversale du troisième élément de bloc profilé (11) diminuant, à partir de la première gorge transversale ou oblique (5) jusqu'à la deuxième gorge transversale ou oblique (5), avec un fond de gorge (10) de la gorge profilée (7) rehaussé radialement par rapport au fond de gorge (15) de la gorge transversale ou oblique (5), une rainure supplémentaire étroite (17) avec une profondeur de rainure $t_N$ mesurée dans la direction radiale R s'étendant le long de toute l'étendue de la gorge profilée (7) dans le fond de gorge (10), laquelle rainure supplémentaire étroite s'étend à partir de la première gorge transversale ou oblique (5) jusqu'à la deuxième gorge transversale ou oblique (5) en s'étendant en diagonale à travers la gorge profilée (7) depuis la paroi de gorge (8) de la gorge profilée (7) limitant l'élément de bloc profilé supplémentaire (11) jusqu'à la paroi de gorge (9) de la gorge profilée (7) limitant le premier élément de bloc profilé (12).

3. Profil de bande de roulement selon les caractéristiques de la revendication 2, dans lequel la direction d'étendue de la gorge profilée (7) est réalisée avec une plus grande composante directionnelle dans la direction périphérique U que dans la direction axiale A.

4. Profil de bande de roulement selon les caractéristiques de la revendication 1, dans lequel le fond de gorge (16) de la gorge profilée (6) est réalisé avec une profondeur de gorge $t_R$ constante le long de son étendue dans la direction d'étendue de la gorge profilée (6), la profondeur de gorge $t_R$ dans chaque section transversale perpendiculairement à la direction d'étendue de la gorge profilée (6) étant à chaque fois la distance radiale maximale depuis la surface d'enveloppe formant la surface de contact avec la route, limitant vers l'extérieur les deux éléments de bloc profilé (12, 13) dans la direction radiale R du pneu.

5. Profil de bande de roulement selon les caractéristiques de la revendication 2, dans lequel la rainure (27) de la gorge profilée (6) est réalisée avec une plus grande largeur c mesurée transversalement à la direction d'étendue le long de son étendue que la rainure (17) de la gorge profilée (7).

6. Profil de bande de roulement selon les caractéristiques d'une ou plusieurs des revendications précédentes, dans lequel la rainure (17, 27) est réalisée le long de son étendue avec une largeur c mesurée transversalement à la direction d'étendue tel que 0,4 mm $\leq$ c $\leq$ 1,5 mm.

7. Profil de bande de roulement selon les caractéristiques de la revendication 6, dans lequel la largeur c de la rainure (17, 27) le long de son étendue est une valeur constante.

Fig. 1

**Fig. 2**

Schnitt II–II

**Fig. 3**

Schnitt III–III

**Fig. 4**

Schnitt IV–IV

## Fig. 5

12  18  6    β
              α
              b    19  16  13

$T_N$                    $T_R$

                              27

Schnitt V-V        $a_{22}$    ↑R

## Fig. 6

12  18  6    α
              β
              b    19  16

                              13

$T_R$                    $T_N$

                              27

Schnitt VI-VI      $a_{21}$    ↑R

## Fig. 7

15  5  16  9  27  13  5  15

$T_N$              $T_R$  $T_Q$

Schnitt VII-VII    ↑R

**IN DER BESCHREIBUNG AUFGEFÜHRTE DOKUMENTE**

**In der Beschreibung aufgeführte Patentdokumente**

- DE 102007061148 A1
- NL 2001388 C1

- EP 2138329 A1